# EUROPEAN PATENT APPLICATION

(11) **EP 4 722 642 A1**
(43) Date of publication of application: **08.04.2026**
(21) Application number: 25205272.5
(22) Date of filing: 29.09.2025
(51) Int. Cl.: G01B 11/24

(54) **CONTOUR SHAPE MEASUREMENT DEVICE AND METHOD FOR THE SAME**

(30) Priority: 04.10.2024 JP 2024174799
(71) Applicant: Kobelco Research Institute, Inc., Kobe-shi, Hyogo 651-0073 (JP)
(72) Inventor: NISHIYAMA, Kohei, Kobe-shi, 651-2271 (JP); FURUTA, Yohei, Kobe-shi, 651-2271 (JP)
(74) Representative: TBK

(57) **Abstract**

The present invention is a contour shape measurement device that measures a contour shape of a peripheral edge of a measurement target on a basis of a shadow image obtained by imaging a shadow of the peripheral edge generated by projecting parallel light from a tangential direction of an outer periphery to the peripheral edge, and controls first to third support members for supporting the measurement target in order to make the parallel light and a surface of the measurement target parallel along a light projection direction. The first to third support members include first to third moving mechanisms that move the first to third support positions of the measurement target in a vertical direction, and in the control, the first to third moving mechanisms are individually controlled.

## Description

### FIELD OF INVENTION

The present invention relates to a contour shape measurement device and a contour shape measurement method for measuring a contour shape of a measurement target having a disk shape.

### BACKGROUND ART

In a device that measures a contour shape of a measurement target having a disk shape on the basis of a shadow image obtained by capturing a shadow (image) of a peripheral edge generated by applying parallel light to the peripheral edge of the measurement target from a tangential direction of an outer periphery, it is necessary to set the parallel light and each of front and back surfaces of the measurement target to be parallel to each other in order to accurately measure the contour shape. For example, Japanese Patent No. 4897658 (D1) discloses a technique of adjusting inclination of parallel light (inclination of a light projection direction of parallel light) for a measurement target placed on a stage.

This shape measurement device disclosed in D1 includes a light projector that projects parallel light to an end of a measurement target having a disk shape, an imaging unit that captures a projection image of the end of the measurement target from a direction facing a light projection direction by the light projector, an optical system holding member that holds the light projector and the imaging unit, an optical system driving unit that drives the optical system holding member to change an inclination of the light projection direction with respect to a surface of the measurement target, an inclination index detector that detects an index of an inclination degree of the measurement target with respect to the light projection direction, and a first inclination adjuster that adjusts the inclination of the light projection direction with respect to the surface of the measurement target by controlling the optical system driving unit in accordance with a detection result of the index of the inclination degree, in which the inclination index detector includes a displacement detector that detects a position of a surface of the measurement target in a direction orthogonal to the light projection direction at a plurality of observation positions along the light projection direction in a state of being held with respect to the optical system holding member, the first inclination adjuster adjusts an inclination in the light projection direction in a direction in which a positional relationship of the surface of the measurement target in a direction orthogonal to the light projection direction at the plurality of observation positions approaches a preset target positional relationship, and measures a shape of an end face of the measurement target on the basis of the projection image obtained by the imaging unit.

Since the shape measurement device disclosed in D1 adjusts the inclination of the light projection direction with respect to the surface of the measurement target by rotationally driving the optical system holding member that holds the light projector and the imaging unit, the attachment accuracy when the light projector and the imaging unit are attached to the optical system holding member before adjusting the inclination of the light projection direction affects the measurement accuracy. In the shape measurement device disclosed in D1, since the first inclination adjuster can adjust only one degree of freedom in the direction orthogonal to the light projection direction, and in order to adjust the inclination in the light projection direction after the light projector and the imaging unit are attached to the optical system holding member, in a case where the optical axes of the light projector and the imaging unit cannot be adjusted for the measurement target by the first inclination adjuster, the light projector and the imaging unit need to be reattached to the optical system holding member.

### SUMMARY OF THE INVENTION

The present invention has been made in view of the above circumstances, and an object of the present invention is to provide a contour shape measurement device and a contour shape measurement method capable of more appropriately adjusting an orientation of a measurement target.

A contour shape measurement device and a contour shape measurement method according to one aspect of the present invention measure a contour shape of a peripheral edge of a measurement target on a basis of a shadow image obtained by imaging a shadow of the peripheral edge generated by projecting parallel light from a tangential direction of an outer periphery to the peripheral edge, and control first to third support members for supporting the measurement target in order to make the parallel light and a surface of the measurement target parallel along a light projection direction. The first to third support members include first to third moving mechanisms that move the first to third support positions of the measurement target in a vertical direction, and in the control, the first to third moving mechanisms are individually controlled.

The above and other objects, features, and advantages of the present invention will be apparent from the following detailed description and accompanying drawings.

### BRIEF DESCRIPTION OF THE DRAWINGS

Fig. 1 is a block diagram showing an electrical configuration of a contour shape measurement device according to an embodiment;
Fig. 2 is a schematic plan view of the contour shape measurement device;
Fig. 3 is a schematic side view of the contour shape measurement device as viewed from a direction A shown in Fig. 2;
Fig. 4 is a schematic side view of the contour shape measurement device as viewed from a direction B shown in Fig. 2;
Figs. 5A and 5B are schematic diagrams for describing a support member;
Fig. 6 is a diagram for describing a plurality of parameters in a contour shape as an example;
Fig. 7 is a diagram for describing calibration of the support member in the contour shape measurement device;
Fig. 8 is a flowchart showing an operation of the contour shape measurement device related to calibration;
Fig. 9 is a flowchart showing an operation of the contour shape measurement device related to calibration of the support member shown in Fig. 8; and
Fig. 10 is a flowchart showing an operation of the contour shape measurement device related to calibration of the support member shown in a modification.

### DETAILED DESCRIPTION

Hereinafter, one or a plurality of embodiments of the present invention will be described with reference to the drawings. However, the scope of the invention is not limited to the disclosed embodiments. Note that in the drawings, the same reference signs denote the same components, and description thereof will be appropriately omitted. In the present specification, when components are collectively referred to, the components will be denoted by reference signs with suffixes omitted, and when components are individually referred to, the components will be denoted by reference signs with suffixes.

A contour shape measurement device according to an embodiment is a device that projects parallel light from a tangential direction of an outer periphery to a peripheral edge of a measurement target having a disk shape, images a shadow of the peripheral edge generated by the parallel light, and measures a contour shape of the peripheral edge on the basis of a shadow image of the peripheral edge. The contour shape measurement device includes at least three of first to third support members that support the measurement target from below at at least three points, and a control unit that controls the first to third support members on the basis of the shadow image of the peripheral edge in order to make the parallel light and a surface of the measurement target parallel along a light projection direction, in which the first to third support members include first to third moving mechanisms that move first to third support positions of the measurement target in a vertical direction, and the control unit individually controls the first to third moving mechanisms. Hereinafter, specifically, the contour shape measurement device and a contour shape measurement method provided in the contour shape measurement device will be described.

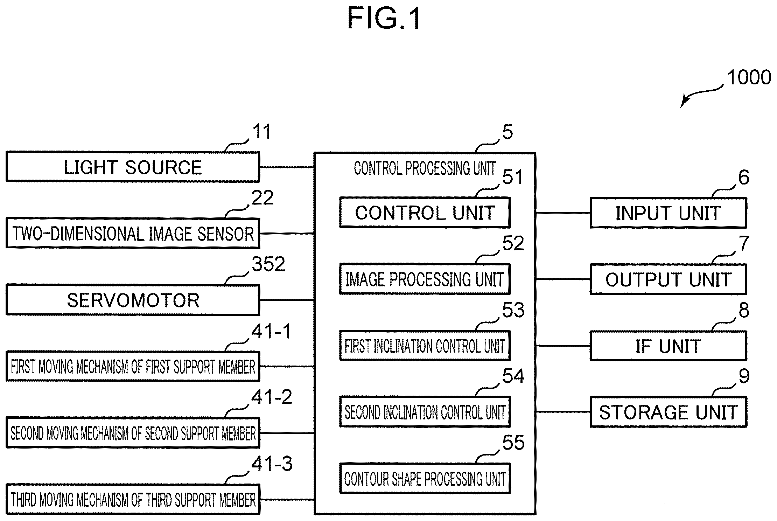

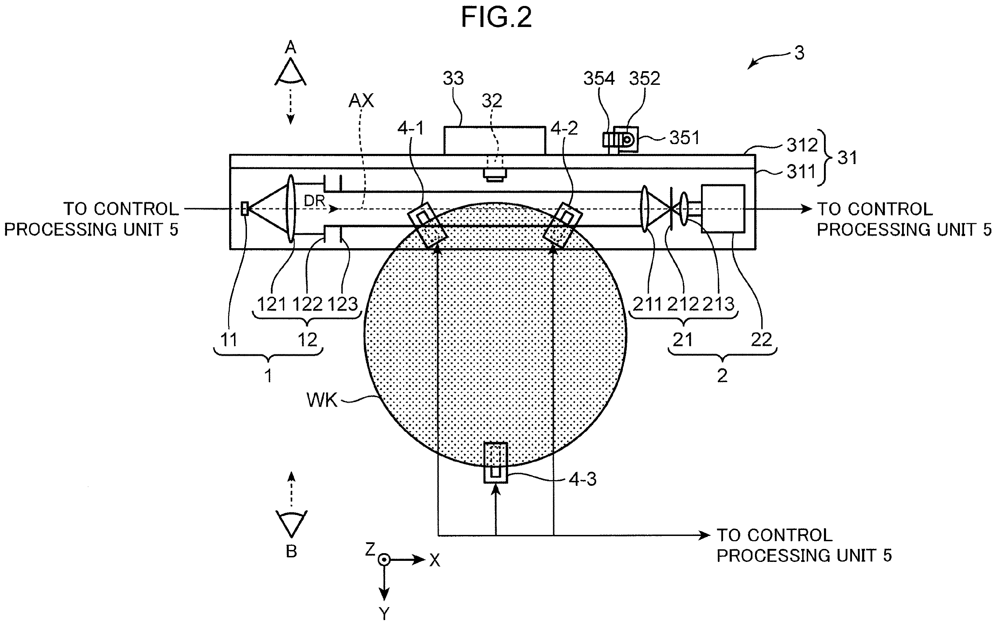

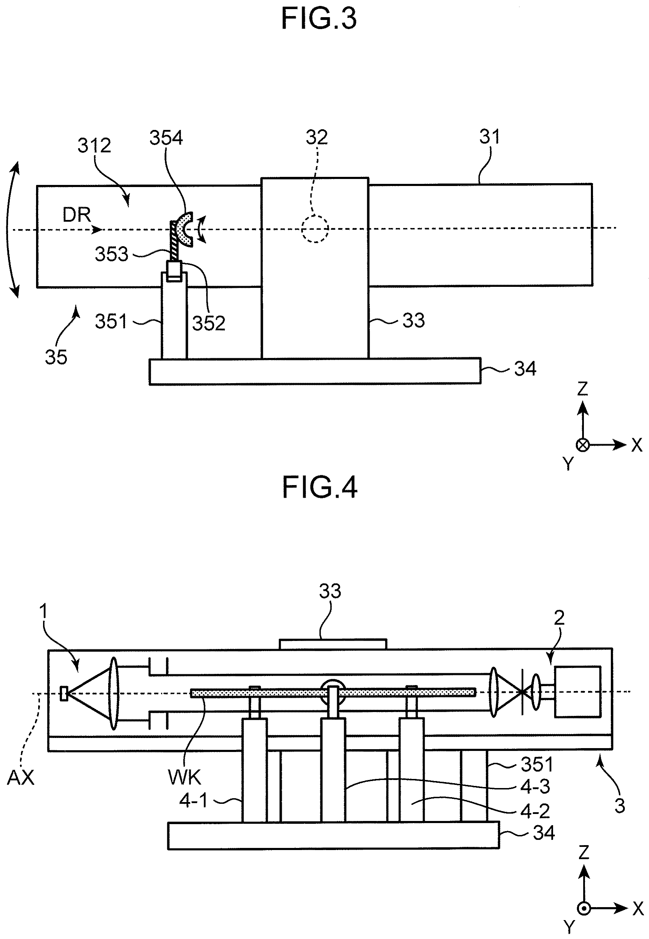

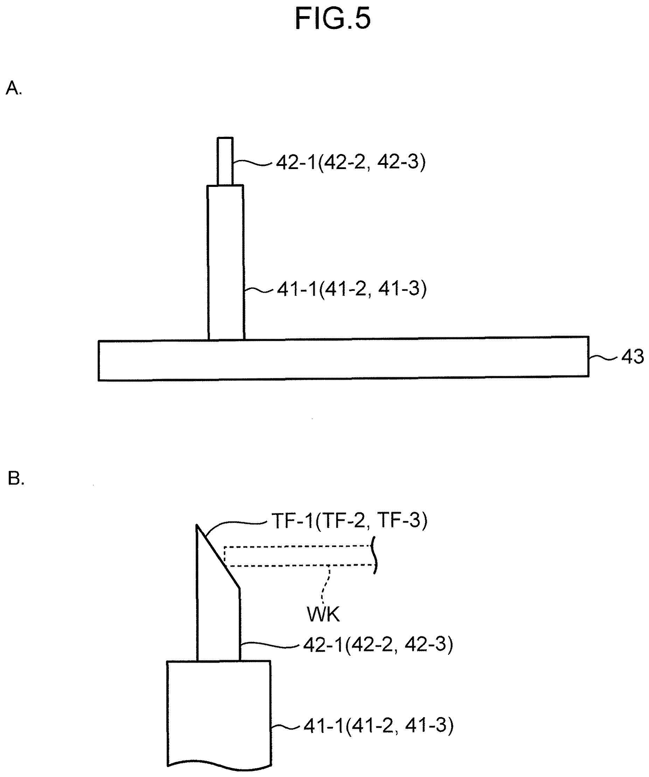

Fig. 1 is a block diagram showing an electrical configuration of the contour shape measurement device according to the embodiment. Fig. 2 is a schematic plan view of the contour shape measurement device. Fig. 3 is a schematic side view of the contour shape measurement device as viewed from a direction A shown in Fig. 2. Fig. 4 is a schematic side view of the contour shape measurement device as viewed from a direction B shown in Fig. 2. Figs. 5A and 5B are schematic diagrams for describing a support member. Fig. 5A is an overall view, and Fig. 5B is a diagram for describing a support claw member.

For example, as shown in Figs. 1 to Figs. 5A and 5B, a contour shape measurement device 1000 according to the embodiment includes a light projector 1, an imaging unit 2, an optical system holder 3, first to third support members 4-1 to 4-3, a control processing unit 5, an input unit 6, an output unit 7, an interface unit (IF unit) 8, and a storage unit 9.

The light projector 1 is a device that is connected to the control processing unit 5 and projects parallel light from a tangential direction (light projection direction) DR of the outer periphery to the peripheral edge of the measurement target WK having a disk shape under the control of the control processing unit 5. The measurement target WK may be any member having a disk shape, and is, for example, a wafer (for example, a silicon wafer) used for manufacturing a semiconductor, or a substrate for a magnetic disk made of aluminum or glass used for a hard disk. The light projector 1 includes, for example, a light source 11 that is connected to the control processing unit 5 and emits illumination light in accordance with the control of the control processing unit 5, and an illumination optical system 12 that emits the illumination light emitted by the light source 11 as parallel light. The light source 11 is a point light source that includes, for example, a white light emitting diode (white LED) and a pinhole plate in which a pinhole of about 300 [µm] to 400 [µm] is formed, and emits white light of the white LED as illumination light through the pinhole. The illumination optical system 12 includes, for example, a collimator lens 121 that collimates the illumination light emitted from the light source 11 and first and second mask plates 122 and 123 having the same shape and having rectangular openings formed therein, collimates the illumination light emitted from the light source 11 with the collimator lens 121, emits parallel light that has a spot shape and has passed through the rectangular openings of the first and second mask plates 122 and 123, and projects the parallel light to the peripheral edge of the measurement target WK in a case where the measurement target WK is disposed. Light outside an imaging range of the imaging unit 2 is shielded by the first and second mask plates 122 and 123. In this example, the number of mask plates is two, but may be one, three or more, or the mask plate may be omitted.

The imaging unit 2 is a device that is connected to the control processing unit 5 and images a shadow (image) of the peripheral edge of the measurement target WK generated by the parallel light under the control of the control processing unit 5. The imaging unit 2 includes, for example, a light receiving optical system 21 and a two-dimensional image sensor 22. The light receiving optical system 21 is a telecentric lens including a first lens 211, a diaphragm 212, and a second lens 213, and forms an image (shadow) of the peripheral edge of the measurement target WK generated by the parallel light on the two-dimensional image sensor. The two-dimensional image sensor 22 includes, for example, a CCD type or CMOS type two-dimensional image sensor connected to the control processing unit 5, captures an image (shadow) of the peripheral edge of the measurement target WK formed by the light receiving optical system 21 in accordance with the control of the control processing unit 5, and outputs data (RAW data) generated by the imaging to the control processing unit 5.

The optical system holder 3 is a device that holds the light projector 1 and the imaging unit 2 in a state where a positional relationship between the light projector 1 and the imaging unit 2 is fixed, is connected to the control processing unit 5, and adjusts an inclination (inclination in the light projection direction DR) of an optical axis AX in the light projector 1 and the imaging unit 2 in accordance with the control of the control processing unit 5.

The inclination of the optical axis AX (inclination in the light projection direction DR) is an inclination of the optical axis AX (inclination in the light projection direction DR) with respect to a surface (front surface or back surface) of the measurement target WK when the peripheral edge of the measurement target WK is located between the light projector 1 and the imaging unit 2, and is uniquely represented by an angle formed by the surface (front surface or back surface) of the measurement target WK and the optical axis AX (light projection direction DR). When the parallel light of the light projector 1 and the surface of the measurement target WK are parallel along the light projection direction DR, the inclination of the optical axis AX (inclination in the light projection direction) is 0 degrees.

The optical system holder 3 includes, for example, a holding member 31, a support shaft 32, a shaft support member 33, a base member 34, and an inclination adjustment mechanism (first inclination adjustment mechanism) 35.

The holding member 31 is a member that holds the light projector 1 and the imaging unit 2. The holding member 31 is, for example, a metal plate material (rigid body) extending in one direction, and has a substantially L-shaped cross section by being bent at substantially 90 degrees so as to form the rectangular holding plate portion 311 and the rectangular standing plate portion 312. In the holding plate portion 311, the light source 11, the collimator lens 121, the first mask plate 122, the second mask plate 123, a first lens 211, the diaphragm 212, the second lens 213, and the two-dimensional image sensor 22 are sequentially and fixedly arranged in that order with the optical axis AX coincident with each other. Therefore, if the optical axis AX and the light projection direction DR are ideally arranged as designed, the optical axis AX and the light projection direction DR coincide with each other. The second mask plate 123 and the first lens 211 are arranged at an appropriate interval so that the peripheral edge of the measurement target WK can be disposed. The standing plate portion 312 is provided with an opening for inserting the support shaft 32 at a substantially central position (a position of an intersection of two diagonals).

Each of the shaft support member 33 and the base member 34 is a plate-like member, and the shaft support member 33 is fixedly disposed on the base member 34 so as to be erected. The support shaft 32 is a columnar member, protrudes from the shaft support member 33 at a position (upper position) higher than a central position in a height direction (vertical direction), and is inserted into the opening of the standing plate portion 312. Thus, the holding member 31 is pivotally supported by the support shaft 32 orthogonal to the light projection direction DR, and is rotatable about the support shaft 32.

As shown in Figs. 2 to 4, an XYZ orthogonal coordinate system is set. If the light projection direction DR (optical axis AX) is ideally arranged as designed, the light projection direction DR (optical axis AX) is an X-axis direction (each of the left and right directions on the sheets of Figs. 2 to 4), and the height direction is a Z-axis direction (each vertical direction on the sheets of Figs. 3 and 4). A Y-axis direction is a direction orthogonal to the light projection direction DR (optical axis AX) and the height direction (the vertical direction on the sheet of Fig. 2). If the contour shape measurement device 1000 is ideally assembled as designed and the peripheral edge of the measurement target WK is ideally disposed between the second mask plate 123 and the first lens 211, the plane of the measurement target WK and an XY plane become parallel.

The inclination adjustment mechanism 35 is a mechanism that is connected to the control processing unit 5 and adjusts the inclination of the light projection direction DR (inclination of the optical axis AX) by rotating the holding member 31 about the support shaft 32 under the control of the control processing unit 5. The inclination adjustment mechanism 35 includes, for example, a columnar rod member 351 erected on the base member 34, a servomotor 352 disposed at a distal end portion of the rod member 351, a worm 353 provided on a rotation shaft of the servomotor 352, and a worm wheel 354 fixedly disposed on the standing plate portion 312 of the holding member 31. The worm 353 and the worm wheel 354 constitute a worm gear in which gears mesh with each other. The servomotor 352 is connected to the control processing unit 5 and rotates in accordance with the control of the control processing unit 5. Thus, the worm gear is driven, and the holding member 31 pivotally supported by the support shaft 32 rotates about the support shaft 32. As a result, the inclination of the light projection direction DR (inclination of the optical axis AX) is changed.

The first to third support members 4-1 to 4-3 are members for supporting the measurement target WK from below at three points. The first to third support members 4-1 to 4-3 are arranged such that the first to third support positions for supporting the measurement target WK are positioned at vertices of a triangle, the first and second support members 4-1 and 4-2 are disposed at positions relatively close to the parallel light, and the third support member 4-3 is disposed at positions relatively far from the parallel light. In the present embodiment, in order to suppress deflection of the measurement target WK, the triangle is an isosceles triangle in which a length of a first line segment connecting the first support position and the second support position is shorter than a length (a length of a third line segment connecting the second support position and the third support position, (a length of the second line segment) = (a length of the third line segment)) of a second line segment connecting the first support position and the third support position, and the first line segment is a base.

Since the first to third support members 4-1 to 4-3 have the same structure, hereinafter, the first support member 4-1 will be mainly described. The reference numerals of the configurations of the second and third support members 4-2 and 4-3 will be described in parentheses after the reference numerals of the configurations of the first support member 4-1 corresponding to the configurations of the second and third support members 4-2 and 4-3 instead of the description of the second and third support members 4-2 and 4-3. The description of the second and third support members 4-2 and 4-3 will be omitted.

For example, as shown in Figs. 5A and 5B, the first support member 4-1 (4-2, 4-3) includes a first moving mechanism 41-1 (41-2, 41-3) that moves the first support position of the measurement target WK in the vertical direction (Z direction), and a first support claw member 42-1 (42-2, 42-3) having an inclined first support surface TF-1 (TF-2, TF-3) so as to be in point contact with the peripheral edge of the measurement target WK. The first moving mechanism 41-1 (41-2, 41-3) is connected (coupled) to the first support claw member 42-1 (42-2, 42-3). The first moving mechanism 41-1 (41-2, 41-3) is connected to the control processing unit 5, and moves the first support claw member 42-1 (42-2, 42-3) in the vertical direction under the control of the control processing unit 5. As a result, the first support position supporting the measurement target WK in point contact with the first support surface TF-1 (TF-2, TF-3) of the first support claw member 42-1 (42-2, 42-3) moves in the vertical direction. The first moving mechanism 41-1 (41-2, 41-3) includes, for example, an electric cylinder (electromagnetic solenoid, electromagnetic actuator) erected on the base member 34. The electric cylinder includes, for example, an electric motor that is connected to the control processing unit 5 and rotates in accordance with the control of the control processing unit 5, a columnar piston rod, and a conversion mechanism that converts rotational motion of the electric motor into linear motion of the piston rod. The first support claw member 42-1 (42-2, 42-3) is a prismatic or cylindrical columnar member, and has the first support surface TF-1 (TF-2, TF-3) having an inclined tapered surface with one end obliquely cut. The first support claw member 42-1 (42-2, 42-3) is fixedly disposed at the other end and connected (connected) to a distal end portion of the piston rod in the electric cylinder as an example of the first moving mechanism 41-1 (41-2, 41-3).

As shown in Fig. 2, such first to third support members 4-1 to 4-3 are arranged such that the first to third support positions are located at vertices of a triangle (in the present embodiment, the isosceles triangle) and the first to third support surfaces TF-1 to TF-3 face the inside of the triangle (in the present embodiment, the isosceles triangle) (specifically, the center of the circumscribed circle of the triangle). The measurement target WK is supported from below by the first to third support surfaces TF-1 to TF-3 of the first to third support claw members 42-1 to 42-3 so as to be in point contact with a periphery of the measurement target WK, and is arranged between the light projector 1 and the imaging unit 2 so that the parallel light is projected to the peripheral edge of the measurement target WK. Therefore, in the holding plate portion 311 of the holding member 31, each opening through which each of the first and second moving mechanisms 41-1 and 41-2 is inserted is formed at a position corresponding to the arrangement position of the first and second support members 4-1 and 4-2. The openings through which the first and second moving mechanisms 41-1 and 41-2 are inserted may be openings through which the first and second support claw members 42-1 and 42-2 are projected and retracted.

The number of support members 4 may be four or more in order to support the measurement target WK from below at four or more points.

The input unit 6 is a device that is connected to the control processing unit 5 and inputs, to the contour shape measurement device 1000, various commands such as a command instructing a start of calibration and a command instructing a start of measurement, and various data necessary for operating the contour shape measurement device 1000, such as the name of the measurement target WK, and the input unit 6 is, for example, a plurality of input switches assigned with predetermined functions, a keyboard, a mouse, or the like. The output unit 7 is a device that is connected to the control processing unit 5 and outputs commands, data, and a measurement result input from the input unit 6 under control of the control processing unit 5. Examples of the output unit 7 are a display device, such as a cathode ray tube (CRT) display, a liquid crystal display (LCD), or an organic electroluminescence (EL) display, and a printing device such as a printer.

Note that the input unit 6 and the output unit 7 may be constituted by a touch panel. When the touch panel is constituted, the input unit 6 is a position input device that detects and inputs operations of a resistance film system or a capacitive system, for example. The output unit 7 is a display device. In this touch panel, the position input device is provided on a display surface of the display device, and one or a plurality of input content candidates that can be input are displayed on the display device. When a user touches a display position where an input content desired to be input is displayed, the position input device detects the touched position, and the display content displayed at the detected position is input to the contour shape measurement device 1000 as a user's operation input content. In such a touch panel, since the user can easily and intuitively understand the input operation, the contour shape measurement device 1000 that is easy for the user to handle is provided.

The IF unit 8 is a circuit that is connected to the control processing unit 5 and inputs or outputs data to or from an external device under control of the control processing unit 5. Examples of the IF unit 8 are an interface circuit of RS-232C which is a serial communication system, an interface circuit using the Bluetooth (registered trademark) standard, and an interface circuit using the Universal Serial Bus (USB) standard. The IF unit 8 may be a communication interface circuit, such as a data communication card, or a communication interface circuit according to the IEEE 802.11 standard, that transmits and receives a communication signal with an external device.

The storage unit 9 is a circuit that is connected to the control processing unit 5 and stores various predetermined programs and various predetermined data under control of the control processing unit 5.

The various predetermined programs include, for example, a control processing program, and the control processing program includes, for example, a control program, an image processing program, a first inclination control program, a second inclination program, and a contour shape processing program. The control program is a program that controls each of the units 11, 22 and 6 to 9 of the contour shape measurement device 1000 in accordance with a function of each unit. The image processing program is a program that performs image processing on data (RAW data) output from the two-dimensional image sensor 22 of the imaging unit 2 to generate image data (shadow image data) that is data representing an image (shadow image) of a shadow of the peripheral edge of the measurement target WK. The first inclination control program is a program for controlling the inclination adjustment mechanism (first inclination adjustment mechanism) 35 such that the parallel light of the light projector 1 and the surface of the measurement target WK are parallel along the light projection direction DR. The second inclination control program is a program for individually controlling the first to third moving mechanisms 41-1 to 41-3 (second inclination adjustment mechanisms) of the first to third support members 4-1 to 4-3 such that the parallel light of the light projector 1 and the surface of the measurement target WK are parallel along the light projection direction DR. The contour shape processing program is a program for obtaining a contour shape of the peripheral edge of the measurement target WK on the basis of a shadow image of the peripheral edge. The various predetermined data include data, such as a name of the measurement target WK, a reference value of a reference measurement target having a known contour shape, and a measurement result, necessary for executing these programs.

Such storage unit 9 includes a read only memory (ROM) that is a nonvolatile storage element, and an electrically erasable programmable read only memory (EEPROM) that is a rewritable nonvolatile storage element. The storage unit 9 includes a random access memory (RAM) serving as a so-called working memory of the control processing unit 5, the working memory storing data and the like generated during execution of the predetermined programs. The storage unit 9 may include a hard disk device or a solid state drive (SSD) having a relatively large storage capacity.

The control processing unit 5 is a circuit for controlling each of the units 11, 22, and 6 to 9 of the contour shape measurement device 1000 in accordance with the function of each unit and measuring the contour shape of the peripheral edge of the measurement target. The control processing unit 5 includes, for example, a central processing unit (CPU) and its peripheral circuits. In the control processing unit 5, a control unit 51, an image processing unit 52, a first inclination control unit 53, a second inclination control unit 54, and a contour shape processing unit 55 are functionally configured by executing the control processing program.

The control unit 51 controls each of the units 11, 22, and 6 to 9 of the contour shape measurement device 1000 in accordance with the function of each unit, and generally controls the contour shape measurement device 1000.

The image processing unit 52 performs image processing on data (RAW data) output from the two-dimensional image sensor 22 of the imaging unit 2 by a known processing method to generate image data (shadow image data) that is data representing an image (shadow image) of a shadow of the peripheral edge of the measurement target WK.

The first inclination control unit 53 controls the inclination adjustment mechanism (first inclination adjustment mechanism) 35 such that the parallel light of the light projector 1 and the surface of the measurement target WK are parallel along the light projection direction DR. For example, in a case where the measurement target WK is disposed between the light projector 1 and the imaging unit 2 by supporting the measurement target WK from below by the first to third support members 4-1 to 4-3, the contour shape measurement device 1000 further includes two first and second distance meters (for example, laser distance meters or the like) that measure each distance from above (or below) to the measurement target WK at two points separated along the optical axis AX in the light projector 1 and the imaging unit 2, the first inclination control unit 53 obtains the inclination (inclination in the light projection direction DR) of the optical axis AX with respect to the surface of the measurement target WK on the basis of a difference (distance difference) between the distances measured by the first and second distance meters, and the inclination adjustment mechanism 35 is controlled so that the obtained inclination of the optical axis AX becomes 0 or the distance difference becomes 0.

The second inclination control unit 54 individually controls the first to third moving mechanisms 41-1 to 41-3 (second inclination adjustment mechanisms) of the first to third support members 4-1 to 4-3 such that the parallel light of the light projector 1 and the surface of the measurement target WK are parallel along the light projection direction DR.

In the present embodiment, by controlling the inclination adjustment mechanism 35, the orientation of the holding member 31 is adjusted such that the parallel light of the light projector 1 and the surface of the measurement target WK are parallel along the light projection direction DR (first calibration processing), and by individually controlling the first to third moving mechanisms 41-1 to 41-3 of the first to third support members 4-1 to 4-3, the orientation of the measurement target WK is adjusted such that the parallel light of the light projector 1 and the surface of the measurement target WK are parallel along the light projection direction DR (second calibration processing). In the second calibration processing, a reference measurement target WK0 is used as the measurement target WK as described later. In this manner, in the present embodiment, the geometric relationship between the light projection direction DR and the surface of the measurement target WK is adjusted in two stages.

Specifically, since the contour shape of the measurement result deviates from the known contour shape when the relationship deviates from being parallel (since an error is included in the contour shape of the measurement result), the second inclination control unit 54 individually controls the first to third moving mechanisms 41-1 to 41-3 of the first to third support members 4-1 to 4-3 to minimize a difference between the known contour shape and the contour shape of the measurement result in a case where the contour shape is measured by using the reference measurement target having the known contour shape as the measurement target WK in order to make the parallel light and the surface of the measurement target parallel along the light projection direction. More specifically, the contour shape of the peripheral edge is divided into a plurality of portions, predetermined one or a plurality of parameters set (defined) in advance for representing the contour shape of the portions are associated with the portions, and the second inclination control unit 54 individually controls the first to third moving mechanisms 41-1 to 41-3 of the first to third support members 4-1 to 4-3 to minimize a difference between a reference value of one parameter of the plurality of parameters in the known contour shape and a measurement value of the one parameter in the contour shape of the measurement result.

In the individual control, the second inclination control unit 54 sequentially executes first movement control of controlling one of the first or second moving mechanism 41-1 or 41-2 (for example, the first moving mechanism 41-1) of the first or second support member 4-1 and 4-2 disposed relatively close to the parallel light to minimize the difference, second movement control of controlling another one of the first or second moving mechanism 41-1 or 41-2 (in this example, the second moving mechanism 41-2) to minimize the difference, and third movement control of controlling the third moving mechanism 41-3 of the third support member 4-3 disposed relatively far from the parallel light to minimize the difference, and after executing the third movement control, returns to the first movement control and sequentially executes the first to third movement controls. Here, while sequentially executing the first to third movement controls, the second inclination control unit 54 makes a determination as to whether the difference is equal to or less than an allowable value before executing the next movement control after executing each of the first to third movement controls, and in a case where the difference is equal to or less than the allowable value as a result of the determination, the second inclination control unit 54 ends without executing the next movement control, and in a case where the difference is not equal to or less than the allowable value as a result of the determination, the second inclination control unit 54 executes the next movement control. The allowable value is appropriately set in advance from, for example, a plurality of samples.

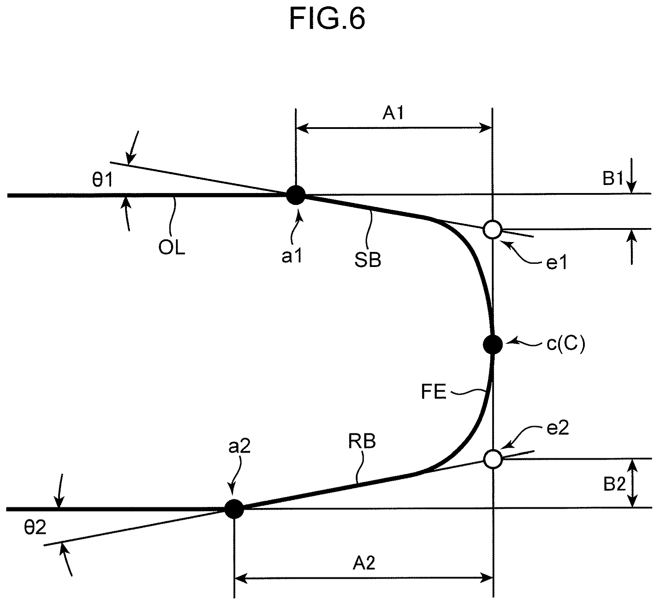

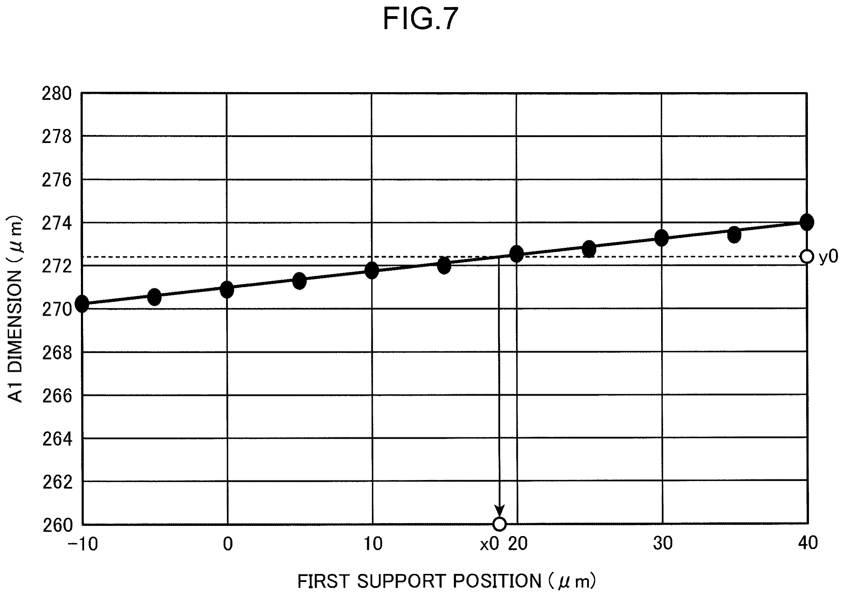

The second inclination control unit 54 will be described more specifically with reference to Figs. 6 and 7. Fig. 6 is a diagram for describing the plurality of parameters in the contour shape as an example. Fig. 7 is a diagram for describing calibration of the support member in the contour shape measurement device. In Fig. 7, the horizontal axis represents the first support position [µm], and the vertical axis represents a parameter A1 [µm].

In Fig. 6, a contour shape OL of the measurement target WK is illustrated by a relatively thick solid line. In the example shown in Fig. 6, the contour shape OL of the peripheral edge is divided into a bevel portion (front surface bevel portion) SB on a front surface (one main surface), a bevel portion (back surface bevel portion) RB on a back surface (the other main surface facing the one main surface), and a distal end portion FE. Three parameters of inclination angles θ1 and θ2, bevel lengths A1 and A2, and bevel heights B1 and B2 are associated with each of the front surface bevel portion SB and the back surface bevel portion RB, and one parameter of a position (distal end position) C of a distal end c is associated with the distal end portion FE. The inclination angle θ1 of the surface bevel portion SB is an angle formed by a surface of the surface bevel portion SB and the surface of the measurement target WK, and is expressed by the angle. The bevel length A1 of the surface bevel portion SB is a distance between a start point a1 of the surface bevel portion SB and an intersection line e1 between the surface of the surface bevel portion SB and a tangential plane of the distal end c, and is expressed by the length. The start point a1 of the surface bevel portion SB is a position where the surface of the measurement target WK starts to be inclined. The surface bevel portion SB extends from the start point a1 of the surface bevel portion SB to a position where the surface of the surface bevel portion SB deviates from the inclination angle θ1 of the surface bevel portion SB. The bevel height B1 of the surface bevel portion SB is a distance between the surface of the measurement target WK and the intersection line e1 between the surface of the surface bevel portion SB and the tangential plane of the distal end c, and is expressed by a length of the distance. Similarly, the inclination angle θ2 of the back surface bevel portion RB is an angle formed by a surface of the back surface bevel portion RB and the back surface of the measurement target WK, and is expressed by the angle. A start point a2 of the back surface bevel portion RB is a position where the back surface of the measurement target WK starts to be inclined. The bevel length A2 of the back surface bevel portion RB is a distance between the start point a2 of the back surface bevel portion RB and an intersection line e2 between the surface of the back surface bevel portion RB and the tangential plane of the distal end c, and is expressed by a length of the distance. The bevel height B2 of the back surface bevel portion RB is a distance between the surface of the measurement target WK and the intersection line e2 between the surface of the back surface bevel portion RB and the tangential plane of the distal end c, and is expressed by a length of the distance. The back surface bevel portion RB extends from the start point a2 of the back surface bevel portion RB to a position where the surface of the back surface bevel portion RB deviates from the inclination angle θ2 of the back surface bevel portion RB. The distal end portion FE is between the front surface bevel portion SB and the back surface bevel portion RB.

All or a plurality of parameters of these seven parameters A1, A2, B1, B2, 01, θ2, and C may be used, but the seven parameters A1, A2, B1, B2, θ1, θ2, and C depend on each other, and each value interlocks with each other. Therefore, in the present embodiment, one parameter of the seven parameters A1, A2, B1, B2, θ1, θ2, and C, for example, the parameter A1 (the bevel length A1 of the surface bevel portion SB) is used. Any one of the other parameters A2, B1, B2, θ1, θ2, and C may be used. Note that the parameters are not limited to A1, A2, B1, B2, θ1, θ2, and C, and may be other parameters as long as the parameters characterize the contour shape of the peripheral edge of the measurement target WK.

In adjusting the orientation of the measurement target WK by the second inclination control unit 54, first, the reference measurement target WK0 (not shown) is selected, and the parameter A1 is measured as a reference value; y0 of the parameter A1. For example, an appropriate one of the plurality of measurement targets WK is selected as the reference measurement target WK0. When the measurement target WK is an industrial product, there is almost no difference between products, and thus the reference measurement target WK0f may be selected from the plurality of measurement targets WK. Then, for example, the parameter A1 of the reference measurement target WK0 is actually measured by the user with a caliper, a 3D shape measuring instrument, or the like, and the actually measured parameter A1; y0 is input to the contour shape measurement device 1000 via the input unit 6, and stored in the storage unit 9 as the reference value; y0 of the parameter A1. Alternatively, for example, the parameter A1; y0 of the reference measurement target WK0 is obtained by using another contour shape measurement device 1000 that has been adjusted, and stored in the storage unit 9 as the reference value; y0 of the parameter A1. The operation of a placement device (not shown) is adjusted such that center positions of the measurement target WK and the reference measurement target WK0 coincide with center positions of the first to third support members 4-1 to 4-3 (center positions of the circumscribed circle of the isosceles triangle) in a case where the measurement target WK and the reference measurement target WK0 are mounted on the first to third support members 4-1 to 4-3.

First, the reference measurement target WK0 is placed on the first to third support members 4-1 to 4-3 by the placement device (not shown). Since there is almost no difference between products as described above, the measurement target WK may be substituted as the reference measurement target WK0.

Subsequently, the second inclination control unit 54 executes first movement control of controlling one of the first or second moving mechanism 41-1 or 41-2, here, the first moving mechanism 41-1 to minimize the difference. More specifically, the second inclination control unit 54 moves the first moving mechanism along the vertical direction at a preset scanning interval in a preset scanning range, obtains the parameter A1 at the first support position by the contour shape processing unit 55 every time the first moving mechanism moves at the scanning interval, and stores the parameter A1 of the obtained actual measurement value in the storage unit 9 in association with the first support position (or the number of movements). Before the start of scanning, the first moving mechanism 41-1 is set so that the first support position becomes a default position (initial position) appropriately set in advance. Subsequently, when the scanning ends, the second inclination control unit 54 obtains a curve (or a straight line); y=f(x) that best fits each measurement result in a case where each measurement result is plotted at each first support position and each coordinate represented by each parameter A1 in a coordinate space in which each of the first support position and the parameter A1 is set to the x axis and the y axis, respectively. As a result, a relationship; f between the first support position; x and the parameter A1; y is obtained. For example, in the example shown in Fig. 7, the scanning range is set to -10 [µm] to +40 [µm] for the default (initial position); 0, and the scanning interval is set to 5 [µm], and each parameter A1; y is measured at each first support position; x of -10 [µm], -5 [µm], 0 [µm], +5 [µm], +10 [µm], +15 [µm], +20 [µm], +25 [µm], +30 [µm], +35 [µm], and +40 [µm]. Subsequently, as shown in Fig. 7, for example, the second inclination control unit 54 substitutes the reference value; y0 of the parameter A1 stored in the storage unit 9 for the parameter A1; y of the obtained curve (or straight line); y=f(x), and obtains the first support position; x0 in this case (y0=f(x0)). Next, the second inclination control unit 54 controls the first moving mechanism 41-1 to set the obtained first support position; x0. As a result, the first movement control of controlling the first moving mechanism 41-1 is executed to minimize the difference.

Subsequently, the second inclination control unit 54 obtains the parameter A1; y0r at the first support position; x0 by the contour shape processing unit 55, and stores the parameter in the storage unit 9. Next, the second inclination control unit 54 determines whether a difference between the reference value; y0 of the parameter A1 and the measurement value; y0r of the parameter A1 of the measurement result is equal to or less than an allowable value. As a result of this determination, in a case where the difference is equal to or less than the allowable value, the second inclination control unit 54 ends without executing the next second movement control. On the other hand, as a result of the determination, in a case where the difference is not equal to or less than the allowable value, the second inclination control unit 54 executes the next second movement control.

In order to minimize the difference, in the second movement control of controlling the second moving mechanism 41-2 in this example, the second inclination control unit 54 operates similarly to the first movement control for the second moving mechanism 41-2 instead of the first moving mechanism 41-1. The second inclination control unit 54 scans the second support position in the scanning range and at the scanning interval to obtain a curve (or a straight line) that best fits each measurement result obtained by obtaining each parameter A1 at each second support position, and controls the second moving mechanism 41-2 so as to be at the second support position obtained by substituting the reference value; y0 of the parameter A1 stored in the storage unit 9 for the obtained curve (or straight line).

Subsequently, the second inclination control unit 54 obtains the parameter A1 at the second support position by the contour shape processing unit 55, and determines whether a difference between the reference value; y0 of the parameter A1 and a measurement value of the parameter A1 of the measurement result is equal to or less than an allowable value. As a result of this determination, in a case where the difference is equal to or less than the allowable value, the second inclination control unit 54 ends without executing the next third movement control. On the other hand, as a result of the determination, in a case where the difference is not equal to or less than the allowable value, the second inclination control unit 54 executes the next third movement control.

In order to minimize the difference, in the third movement control of controlling the third moving mechanism 41-3, the second inclination control unit 54 operates similarly to the first movement control for the third moving mechanism 41-3 instead of the first moving mechanism 41-1. The second inclination control unit 54 scans the third support position in the scanning range and at the scanning interval to obtain a curve (or a straight line) that best fits each measurement result obtained by obtaining each parameter A1 at each third support position, and controls the third moving mechanism 41-3 so as to be at the third support position obtained by substituting the reference value; y0 of the parameter A1 stored in the storage unit 9 for the obtained curve (or straight line).

Subsequently, the second inclination control unit 54 obtains the parameter A1 at the third support position by the contour shape processing unit 55, and determines whether a difference between the reference value; y0 of the parameter A1 and a measurement value of the parameter A1 of the measurement result is equal to or less than an allowable value. As a result of this determination, in a case where the difference is equal to or less than the allowable value, the second inclination control unit 54 ends without executing the next first movement control. On the other hand, as a result of the determination, in a case where the difference is not equal to or less than the allowable value, the second inclination control unit 54 executes the next first movement control.

In this manner, in first to third movement processings, after each movement control, the processing is sequentially performed cyclically until the difference between the reference value; y0 of the parameter A1 and the measurement value of the parameter A1 is equal to or less than the allowable value.

Since there may be a case where the difference does not become equal to or less than the allowable value even if the movement control is cyclically sequentially executed, the contour shape measurement device 1000 may be configured such that the number of times of sequential execution of the first to third movement controls (the number of circulations) is appropriately set in advance to, for example, three times or five times, and in a case where the difference does not become equal to or less than the allowable value even if the number of circulations ends, the first to third movement controls end, and an error message (for example, "Calibration cannot be performed. Request the manufacturer for a repair." or the like) is output to the output unit 7.

In a case of adjustment using the plurality of parameters, for example, the processing proceeds as follows. The support position x0 is obtained by the above method for each parameter, an average value of the plurality of obtained support positions x0 is calculated, and the moving mechanism is controlled so as to be the calculated average value. An adjustment termination condition is that the difference between the reference value and the measurement value of all the parameters is equal to or less than the allowable value set for each parameter.

Returning to Figs. 1 to Figs. 5A and 5B, the contour shape processing unit 55 obtains the contour shape of the peripheral edge on the basis of the shadow image of the peripheral edge of the measurement target WK. Then, the contour shape processing unit 55 obtains the parameters A1, A2, B1, B2, θ1, θ2, and C from the generated straight lines and curves, and stores the parameters in the storage unit 9.

The control processing unit 5, the input unit 6, the output unit 7, the IF unit 8, and the storage unit 9 in the contour shape measurement device 1000 can be configured by, for example, a desktop computer or a laptop computer.

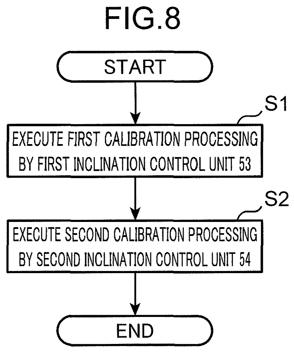

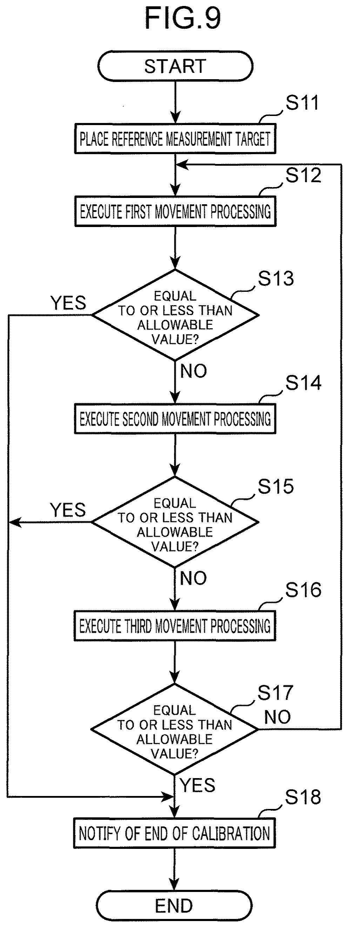

Next, the operation according to the present embodiment will be described. Fig. 8 is a flowchart showing an operation of the contour shape measurement device related to calibration. Fig. 9 is a flowchart showing an operation of the contour shape measurement device related to calibration of the support member shown in Fig. 8.

When the contour shape measurement device 1000 having such a configuration is powered on, initialization of necessary units is performed, and the operation is started. In the control processing unit 5, the control unit 51, the image processing unit 52, the first inclination control unit 53, the second inclination control unit 54, and the contour shape processing unit 55 are functionally configured by execution of the control processing program.

When the start of calibration is supported by the user (operator) via the input unit 6, in Fig. 8, first, the contour shape measurement device 1000 controls the inclination adjustment mechanism 35 by the first inclination control unit 53 of the control processing unit 5 to adjust the orientation of the holding member 31 such that the parallel light of the light projector 1 and the surface of the measurement target WK are parallel along the light projection direction DR (S1, first calibration processing).

Then, the contour shape measurement device 1000 controls the first to third moving mechanisms 41-1 to 41-3 of the first to third support members 4-1 to 4-3 by the second inclination control unit 54 of the control processing unit 5 to adjust the orientation of the measurement target WK (reference measurement target WK0) such that the parallel light of the light projector 1 and the surface of the measurement target WK are parallel along the light projection direction DR (S2, second calibration processing), and ends this processing.

In the second calibration processing S2, in Fig. 9, first, the contour shape measurement device 1000 causes the control processing unit 5 to place the reference measurement target WK0 on the first to third support members 4-1 to 4-3 by the placement device (not shown) (S11).

Subsequently, the contour shape measurement device 1000 executes the first movement control by the second inclination control unit 54 in order to calibrate the first support member 4-1 (S12).

Next, the contour shape measurement device 1000 determines whether the difference between the reference value of the parameter A1 and the measurement value of the parameter A1 is equal to or less than the allowable value at the first support position after the execution of the first movement control in the processing S12 (S13). As a result of this determination, in a case where the difference is equal to or less than the allowable value (Yes), the second inclination control unit 54 executes processing S18 without executing the next second movement control. On the other hand, in a case where the difference is not equal to or less than the allowable value (No) as a result of the determination, the second inclination control unit 54 executes processing S14 to execute the next second movement control.

In the processing S14, the contour shape measurement device 1000 executes the second movement control by the second inclination control unit 54 in order to calibrate the second support member 4-2.

Next, the contour shape measurement device 1000 determines whether the difference between the reference value of the parameter A1 and the measurement value of the parameter A1 is equal to or less than the allowable value at the second support position after the execution of the second movement control in the processing S14 (S15). As a result of this determination, in a case where the difference is equal to or less than the allowable value (Yes), the second inclination control unit 54 executes the processing S18 without executing the next third movement control. On the other hand, in a case where the difference is not equal to or less than the allowable value (No) as a result of the determination, the second inclination control unit 54 executes processing S16 to execute the next third movement control.

In the processing S16, the contour shape measurement device 1000 executes the third movement control by the second inclination control unit 54 in order to calibrate the third support member 4-3.

Next, the contour shape measurement device 1000 determines whether the difference between the reference value of the parameter A1 and the measurement value of the parameter A 1 is equal to or less than the allowable value at the third support position after the execution of the third movement control in the processing S16 (S17). As a result of this determination, in a case where the difference is equal to or less than the allowable value (Yes), the second inclination control unit 54 executes processing S18 without executing the next first movement control. On the other hand, in a case where the difference is not equal to or less than the allowable value (No) as a result of the determination, the second inclination control unit 54 returns the processing to the processing S12 to execute the next first movement control.

In the processing S18, the contour shape measurement device 1000 notifies the end of the calibration by the second inclination control unit 54, and ends this processing. In the notification, a message indicating the end of calibration such as "Calibration is completed." is output to the output unit 7.

Note that the calibration does not need to be performed for each measurement, and may be performed at an appropriate interval (regularly or irregularly) as necessary. For example, in a case where the measurement target WK is supported by the support member 4, if the support claw member 42 is formed of a material softer than the measurement target WK in order not to damage the measurement target WK, the support surface TF of the support claw member 42 is worn by a plurality of measurements, and the support position is deviated. Therefore, in a case where a predetermined number of times of measurement set in advance is reached, the calibration is executed in response to an instruction to start the calibration by the user or in accordance with determination of the number of times of measurement by the contour shape measurement device 1000.

As described above, in the contour shape measurement device and the contour shape measurement method provided in the contour shape measurement device 1000 according to the embodiment, the measurement target WK is supported from below by at least the first to third support members 4-1 to 4-3 at at least three points, and the first to third moving mechanisms 41-1 to 41-3 of the first to third support members 4-1 to 4-3 that move the first to third support positions of the measurement target WK in the vertical direction are individually controlled. Therefore, it is not necessary to reattach the light projector 1 and the imaging unit 2, and the orientation of the measurement target WK can be adjusted with two degrees of freedom. Thus, the orientation of the measurement target WK can be more appropriately adjusted.

In the contour shape measurement device 1000 and the contour shape measurement method, the first to third support positions of the first to third support members 4-1 to 4-3 can be calibrated by using the reference measurement target WK0 having the known contour shape such that the parallel light and the surface of the measurement target WK are parallel along the light projection direction.

Since the contour shape measurement device 1000 and the contour shape measurement method perform calibration by using one parameter of a plurality of parameters, the processing for calibration can be simplified.

In the contour shape measurement device 1000 and the contour shape measurement method, the first to third movement processings are sequentially performed cyclically until the difference becomes equal to or less than the allowable value, and thus, calibration can be performed more reliably.

In a case where the measurement target WK having a disk shape is relatively thin, if the distance between the support positions is long, there is a possibility that the measurement target WK is bent. If the peripheral edge to which the parallel light is projected bends, the measurement accuracy in the contour shape of the peripheral edge deteriorates. Therefore, the distance between the first and second support positions that support the peripheral edge to which the parallel light is projected is preferably short. When the first to third support members 4-1 to 4-3 are disposed such that the first to third support positions are located at the vertices of an equilateral triangle, the distances between the first to third support positions are equal. However, in the contour shape measurement device 1000 and the contour shape measurement method, since the first to third support members 4-1 to 4-3 are disposed such that the first to third support members are located at the vertices of an isosceles triangle whose base is a line segment connecting the first support position and the second support position, the distance (distance 12) between the first and second support positions can be made shorter than the distance (distance 13) between the first and third support positions and the distance (distance 23) between of the second and third support positions. Therefore, the possibility of the bending can be reduced, and deterioration in measurement accuracy can be reduced.

In the contour shape measurement device 1000 and the contour shape measurement method, since the first to third support members 4-1 to 4-3 are disposed such that the inclined first to third support surfaces face inward of the triangle, the movement in a horizontal direction (movement in the XY plane) is hindered in a case where the first to third support members 4-1 to 4-3 are individually controlled in the vertical direction. Therefore, the measurement target WK can be more reliably supported by the first to third support members 4-1 to 4-3, and the possibility that the measurement target WK deviates from the support of the first to third support members 4-1 to 4-3 can be reduced.

Note that, in the above embodiment, the second calibration processing is executed by the first to third movement controls, but may be executed by the first and second movement controls (a modification of the second calibration processing). Specifically, the second inclination control unit 54 alternately executes the first movement control of controlling one of the first or second moving mechanism 41-1 or 41-2 (for example, the first moving mechanism 41-1) in the first or second support member 4-1 or 4-2 and the second movement control of controlling another one of the first or second moving mechanism 41-1 or 41-2 (in this example, the second moving mechanism 41-2) until a difference between a reference value of one parameter of the plurality of parameters in the known contour shape and a measurement value of the one parameter in the contour shape of the measurement result is equal to or less than an allowable value. In many cases, calibration can be performed by adjusting the first and second support positions of the first and second support members 4-1 and 4-2 disposed at positions relatively close to the parallel light. Since the contour shape measurement device 1000 in the modification alternately executes the first and second movement processing until the difference becomes equal to or less than the allowable value, calibration can be performed in a shorter time.

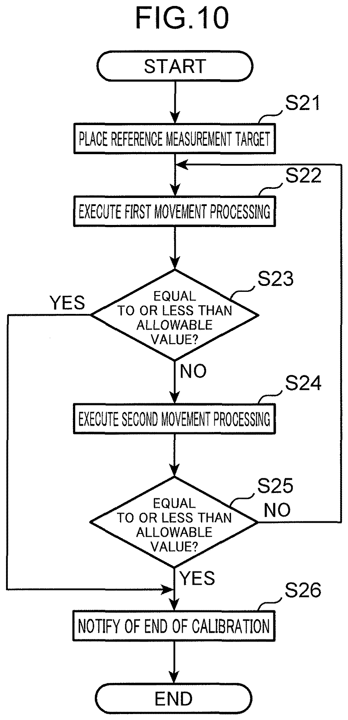

Fig. 10 is a flowchart showing an operation of the contour shape measurement device related to the calibration of the support member shown in the modification. In the second calibration processing in the contour shape measurement device 1000 according to this modification, the following operation shown in FIG. 10 is executed instead of the above-described operation shown in FIG. 9.

In Fig. 10, first, the contour shape measurement device 1000 places the reference measurement target WK0 on the first to third support members 4-1 to 4-3 similarly to the processing S11 (S21), and executes the first movement control to calibrate the first support member 4-1 similarly to the processing S12 (S22).

Next, the contour shape measurement device 1000 determines whether the difference between the reference value of the parameter A1 and the measurement value of the parameter A1 is equal to or less than the allowable value at the first support position after the execution of the first movement control in the processing S22 (S23). As a result of this determination, in a case where the difference is equal to or less than the allowable value (Yes), the second inclination control unit 54 executes the processing S26 without executing the next second movement control. On the other hand, in a case where the difference is not equal to or less than the allowable value (No) as a result of the determination, the second inclination control unit 54 executes processing S24 to execute the next second movement control.

In processing S24, the contour shape measurement device 1000 executes the second movement control in order to calibrate the second support member 4-2 similarly to the processing S14.

Next, the contour shape measurement device 1000 determines whether the difference between the reference value of the parameter A1 and the measurement value of the parameter A 1 is equal to or less than the allowable value at the second support position after the execution of the second movement control in the processing S24 (S25). As a result of this determination, in a case where the difference is equal to or less than the allowable value (Yes), the second inclination control unit 54 executes processing S26 without executing the next first movement control. On the other hand, in a case where the difference is not equal to or less than the allowable value (No) as a result of the determination, the second inclination control unit 54 returns the processing to the processing S22 to execute the next first movement control.

In the processing S26, the contour shape measurement device 1000 notifies the end of the calibration as in the processing S18, and ends this processing.

The present specification discloses various aspects of techniques as described above, and the main techniques of the disclosed aspects are summarized below.

A contour shape measurement device according to an aspect is a device that projects parallel light from a tangential direction of an outer periphery to a peripheral edge of a measurement target having a disk shape, images a shadow of the peripheral edge generated by the parallel light, and measures a contour shape of the peripheral edge on a basis of the shadow image of the peripheral edge imaged, the device including: at least three of first to third support members that support the measurement target from below at at least three points; and a control unit that controls the first to third support members on a basis of a shadow image of the peripheral edge in order to make the parallel light and a surface of the measurement target parallel along a light projection direction, in which the first to third support members include first to third moving mechanisms that move the first to third support positions of the measurement target in a vertical direction, and the control unit individually controls the first to third moving mechanisms.

In such a contour shape measurement device, the measurement target is supported from below by at least the first to third support members at at least three points, and the first to third moving mechanisms of the first to third support members that move the first to third support positions of the measurement target in the vertical direction are individually controlled. Therefore, it is not necessary to reattach the light projector and the imaging unit, and the orientation of the measurement target can be adjusted with two degrees of freedom. Thus, the orientation of the measurement target can be more appropriately adjusted.

In another aspect, in the contour shape measurement device described above, the control unit individually controls the first to third moving mechanisms to minimize a difference between a known contour shape and a contour shape of a measurement result in a case where the contour shape is measured by using a reference measurement target having the known contour shape as the measurement target in order to make the parallel light and the surface of the measurement target parallel along the light projection direction.

In such a contour shape measurement device, the first to third support positions of the first to third support members can be calibrated by using the reference measurement target having the known contour shape such that the parallel light and the surface of the measurement target are parallel along the light projection direction.

In another aspect, in the contour shape measurement device described above, the contour shape of the peripheral edge is divided into a plurality of portions, and one or a plurality of parameters are associated with the portions, and the control unit individually controls the first to third moving mechanisms on a basis of a difference between a reference value of each of the one or plurality of parameters in the known contour shape and a measurement value of each of the one or plurality of parameters in the contour shape of the measurement result.

Such a contour shape measurement device can individually control the first to third moving mechanisms on the basis of the difference between each reference value and each measurement value in the one or plurality of parameters.

In another aspect, in the contour shape measurement device described above, the contour shape of the peripheral edge is divided into a plurality of portions, and one or a plurality of parameters are associated with the portions, and the control unit individually controls the first to third moving mechanisms to minimize a difference between a reference value of one parameter of the plurality of parameters in the known contour shape and a measurement value of the one parameter in the contour shape of the measurement result.

Since such a contour shape measurement device performs calibration by using one parameter of a plurality of parameters, the processing for calibration can be simplified.

In another aspect, in the contour shape measurement device described above, the first to third support members are disposed such that the first to third support positions are located at vertices of a triangle, the first and second support members are disposed at positions relatively close to the parallel light, and the third support member is disposed at a position relatively far from the parallel light, and the control unit sequentially executes a first movement control of controlling one of the first or second moving mechanism on a basis of the difference, a second movement control of controlling another one of the first or second moving mechanism on a basis of the difference, and a third movement control of controlling the third moving mechanism on a basis of the difference, returns to the first movement control after executing the third movement control, and sequentially executes the first to third movement controls, and while sequentially executing the first to third movement controls, before executing a next movement control after executing each of the first to third movement controls, the control unit makes a determination as to whether a value based on the difference is equal to or less than an allowable value, and in a case where the value based on the difference is equal to or less than the allowable value as a result of the determination, the control unit ends without executing the next movement control, and in a case where the value based on the difference is not equal to or less than the allowable value as a result of the determination, the control unit executes the next movement control.

In such a contour shape measurement device, the first to third movement processings are sequentially performed cyclically until the value based on the difference becomes equal to or less than the allowable value, and thus, calibration can be performed more reliably.

In another aspect, in the contour shape measurement device described above, the first to third support members are disposed such that the first to third support positions are located at vertices of a triangle, the first and second support members are disposed at positions relatively close to the parallel light, the third support member is disposed at a position relatively far from the parallel light, and the control unit alternately executes the first movement control of controlling one of the first or second moving mechanism and the second movement control of controlling another one of the first or second moving mechanism until the value based on the difference between the reference value of the one parameter of the plurality of parameters in the known contour shape and a measurement value of the one parameter in the contour shape of the measurement result is equal to or less than the allowable value.

In many cases, calibration can be performed by adjusting the first and second support positions of the first and second support members disposed at positions relatively close to the parallel light. Since the contour shape measurement device alternately executes the first and second movement processing until the value based on the difference becomes equal to or less than the allowable value, calibration can be performed in a shorter time.

In another aspect, in the contour shape measurement device described above, the first to third support members are disposed such that a length of a first line segment connecting the first support position and the second support position is shorter than a length of a second line segment connecting the first support position and the third support position, and the first to third support members are located at vertices of an isosceles triangle having the first line segment as a base, the first and second support members are disposed at positions relatively close to the parallel light, and the third support member is disposed at a position relatively far from the parallel light.

In a case where the measurement target having a disk shape is relatively thin, if the distance between the support positions is long, there is a possibility that the measurement target is bent. If the peripheral edge to which the parallel light is projected bends, the measurement accuracy in the contour shape of the peripheral edge deteriorates. Therefore, the distance between the first and second support positions that support the peripheral edge to which the parallel light is projected is preferably short. When the first to third support members are disposed such that the first to third support positions are located at the vertices of an equilateral triangle, the distances between the first to third support positions are equal. However, in the contour shape measurement device, since the first to third support members are disposed such that the first to third support members are located at the vertices of an isosceles triangle whose base is a line segment connecting the first support position and the second support position, the distance (distance 12) between the first and second support positions can be made shorter than the distance (distance 13) between the first and third support positions and the distance (distance 23) between the second and third support positions. Therefore, the possibility of the bending can be reduced, and deterioration in measurement accuracy can be reduced.

In another aspect, in the contour shape measurement device described above, the first to third support members further include first to third support claw members having inclined first to third support surfaces so as to be in point contact with the peripheral edge of the measurement target, the first to third support members are disposed such that the first to third support positions are located at vertices of a triangle and the first to third support surfaces face inward of the triangle, and the first to third moving mechanisms are connected to the first to third support claw members and move the first to third support claw members in the vertical direction.

In such a contour shape measurement device, since the first to third support members are disposed such that the inclined first to third support surfaces face inward of the triangle, in a case where the first to third support members are individually controlled in the vertical direction, the measurement target can be more reliably supported by the first to third support members, and the possibility that the measurement target deviates from the support of the first to third support members can be reduced.

A contour shape measurement method according to another aspect is a method of projecting parallel light from a tangential direction of an outer periphery to a peripheral edge of a measurement target having a disk shape, imaging a shadow of the peripheral edge generated by the parallel light, and measuring a contour shape of the peripheral edge on a basis of the shadow image of the peripheral edge imaged, the method including supporting the measurement target from below at at least three points by at least three of first to third support members, and controlling, by a control unit, the first to third support members on a basis of a shadow image of the peripheral edge in order to make the parallel light and the surface of the measurement target parallel along a light projection direction, in which the first to third support members include first to third moving mechanisms that move the first to third support positions of the measurement target in a vertical direction, and the controlling includes individually controlling the first to third moving mechanisms.

In such a contour shape measurement method, the measurement target is supported from below by at least the first to third support members at at least three points, and the first to third moving mechanisms of the first to third support members that move the first to third support positions of the measurement target in the vertical direction are individually controlled. Therefore, it is not necessary to reattach the light projector and the imaging unit, and the orientation of the measurement target can be adjusted with two degrees of freedom. Thus, the orientation of the measurement target can be more appropriately adjusted.

This application is based on Japanese Patent Application No. 2024-174799 filed on October 4, 2024, the content of which is included in the present application.

Although the present invention has been appropriately and sufficiently described through the embodiments with reference to the above drawings to express the present invention, it should be recognized that a person skilled in the art can easily modify and/or improve the above-described embodiments. Therefore, unless a change or improvement made by a person skilled in the art is at a level departing from the scope of rights of the claims described in claims, the change or improvement is interpreted to be included in the scope of rights of the claims.

## Claims

1. A contour shape measurement device that projects parallel light from a tangential direction of an outer periphery to a peripheral edge of a measurement target having a disk shape, images a shadow of the peripheral edge generated by the parallel light, and measures a contour shape of the peripheral edge on a basis of the shadow image of the peripheral edge imaged, the contour shape measurement device comprising:
at least three of first to third support members that support the measurement target from below at at least three points; and
a control unit that controls the first to third support members on a basis of a shadow image of the peripheral edge in order to make the parallel light and a surface of the measurement target parallel along a light projection direction,
wherein
the first to third support members include first to third moving mechanisms that move the first to third support positions of the measurement target in a vertical direction, and
the control unit individually controls the first to third moving mechanisms.

2. The contour shape measurement device according to claim 1, wherein the control unit individually controls the first to third moving mechanisms to minimize a difference between a known contour shape and a contour shape of a measurement result in a case where the contour shape is measured by using a reference measurement target having the known contour shape as the measurement target in order to make the parallel light and the surface of the measurement target parallel along the light projection direction.

3. The contour shape measurement device according to claim 2, wherein
the contour shape of the peripheral edge is divided into a plurality of portions, and one or a plurality of parameters are associated with the portions, and
the control unit individually controls the first to third moving mechanisms on a basis of a difference between a reference value of each of the one or plurality of parameters in the known contour shape and a measurement value of each of the one or plurality of parameters in the contour shape of the measurement result.

4. The contour shape measurement device according to claim 2, wherein
the contour shape of the peripheral edge is divided into a plurality of portions, and one or a plurality of parameters are associated with the portions, and
the control unit individually controls the first to third moving mechanisms to minimize a difference between a reference value of one parameter of the plurality of parameters in the known contour shape and a measurement value of the one parameter in the contour shape of the measurement result.

5. The contour shape measurement device according to claim 3, wherein
the first to third support members are disposed such that the first to third support positions are located at vertices of a triangle,
the first and second support members are disposed at positions relatively close to the parallel light, and
the third support member is disposed at a position relatively far from the parallel light, and
the control unit sequentially executes a first movement control of controlling one of the first or second moving mechanism on a basis of the difference, a second movement control of controlling another one of the first or second moving mechanism on a basis of the difference, and a third movement control of controlling the third moving mechanism on a basis of the difference, returns to the first movement control after executing the third movement control, and sequentially executes the first to third movement controls, and
while sequentially executing the first to third movement controls, before executing a next movement control after executing each of the first to third movement controls, the control unit makes a determination as to whether a value based on the difference is equal to or less than an allowable value, and in a case where the value based on the difference is equal to or less than the allowable value as a result of the determination, the control unit ends without executing the next movement control, and in a case where the value based on the difference is not equal to or less than the allowable value as a result of the determination, the control unit executes the next movement control.

6. The contour shape measurement device according to claim 3, wherein
the first to third support members are disposed such that the first to third support positions are located at vertices of a triangle,
the first and second support members are disposed at positions relatively close to the parallel light,
the third support member is disposed at a position relatively far from the parallel light, and
the control unit alternately executes first movement control of controlling one of the first or second moving mechanism to minimize the difference and second movement control of controlling another one of the first or second moving mechanism to minimize the difference until a value based on the difference becomes equal to or less than an allowable value.

7. The contour shape measurement device according to any one of claims 1 to 6, wherein
the first to third support members are disposed such that a length of a first line segment connecting the first support position and the second support position is shorter than a length of a second line segment connecting the first support position and the third support position, and the first to third support members are located at vertices of an isosceles triangle having the first line segment as a base,
the first and second support members are disposed at positions relatively close to the parallel light, and
the third support member is disposed at a position relatively far from the parallel light.

8. The contour shape measurement device according to any one of claims 1 to 6, wherein
the first to third support members further include first to third support claw members having inclined first to third support surfaces so as to be in point contact with the peripheral edge of the measurement target,
the first to third support members are disposed such that the first to third support positions are located at vertices of a triangle and the first to third support surfaces face inward of the triangle, and
the first to third moving mechanisms are connected to the first to third support claw members and move the first to third support claw members in the vertical direction.

9. A contour shape measurement method of projecting parallel light from a tangential direction of an outer periphery to a peripheral edge of a measurement target having a disk shape, imaging a shadow of the peripheral edge generated by the parallel light, and measuring a contour shape of the peripheral edge on a basis of the shadow image of the peripheral edge imaged, the method comprising:
supporting the measurement target from below at at least three points by at least three of first to third support members; and
controlling, by a control unit, the first to third support members on a basis of a shadow image of the peripheral edge in order to make the parallel light and the surface of the measurement target parallel along a light projection direction,
wherein
the first to third support members include first to third moving mechanisms that move the first to third support positions of the measurement target in a vertical direction, and
the controlling includes individually controlling the first to third moving mechanisms.
